# EUROPÄISCHE PATENTSCHRIFT

(11) **EP 1 125 073 B1**
(45) Veröffentlichungstag und Bekanntmachung des Hinweises auf die Patenterteilung: **04.05.2005**
(21) Anmeldenummer: 99952732.8
(22) Anmeldetag: 25.10.1999
(51) Int. Cl.: F16K 11/078, F16K 35/04

(54) **MISCHBATTERIEKARTUSCHE MIT TANGENTIELLER FEDER**
MIXER-FAUCET CARTRIDGE WITH TANGENTIAL SPRING
CARTOUCHE DE MITIGEUR A RESSORT TANGENTIEL

(30) Priorität: 03.11.1998 HU 9802521
(43) Veröffentlichungstag der Anmeldung: 22.08.2001
(73) Patentinhaber: Kerox-Multipolar II. KFT., 2049 Diosd (HU)
(72) Erfinder: MAGOCSI, Tamás;, H-2213 Monorierdo (HU)
(74) Vertreter: Kovacs, Ivanné
(86) Internationale Anmeldenummer: PCT/HU1999/000072
(87) Internationale Veröffentlichungsnummer: WO 2000/026566

(56) Entgegenhaltungen:
- EP-A- 0 356 402
- WO-A-98/55787
- DE-A- 4 340 712
- DE-A- 19 753 950
- DE-C- 732 411
- US-A- 4 387 880

## Beschreibung

Der **Gegenstand der Erfindung** ist eine als Mischbatterie für kaltes und warmes Wasser gebräuchliche Kartusche, welche Kartusche zwei übereinander angeordnete, miteinander eine Flachdichtung bildende Steuerscheiben besitzt, u. zw. eine untere Einlasscheibe und eine obere Steuerscheibe.

Für die zur Mischung von Kalt- und Warmwasser dienenden, sogenannten Mischbatterien werden bereits verbreitet die sogenannten Kartuschen verwendet, welche in einer kompletten Einheit die Scheiben der Keramik-Flachdichtung sowie die den beweglichen Teil der Flachdichtung entsprechend bewegenden Elemente enthalten.

Die solchen Kartuschen haben den Vorteil, dass sich einerseits der Hersteller der Batterie und der Kartusche trennen können, da die Batterie-Herstellfirma ihre Batterien durch einfache Einsetzung der von einer anderen Firma zugelieferten Kartusche komplettieren, das heisst funktionsfähig machen kann.

Ein weiterer Vorteil der heutzutage oft verwendeten Kartuschen ist, dass sie bei ihrem Schadhaftwerden äusserst einfach zu wechseln sind, ohne den Wasseranschluss der Batterie freilegen zu müssen, also die Reparatur der mit Kartuschen ausgestalteten Batterien kann mit kleinerem Aufwand gelöst werden.

Eine solche Lösung ist auch in der Patentbeschreibung Nr. DE 2739587 C2 enthalten.

Beim Drehen der zurzeit gebräulichen Kartuschen kann mit der selben Kraft Wasser minimaler und maximaler Temperatur durch den Hahn ausfliessen gelassen, so werden die Kartuschen meistens überdreht und erst danach wird das Auslaufwasser auf die notwendige Temperatur geregelt, was einen überflüssigen Wasser- und Energieverbrauch zur Folge hat. Die Erfindung beschränkt den derartigen Mehrverbrauch sowie kann durch die Ermahnung des Benützers die Verbrühungsgefahr vermindern.

Es sind bereits verschiedene Versuche zur Lösung des obigen Problems bekannt, welche wie folgt beschrieben werden.

Das Veröffentlichungsdokument Nr. DE 4340712 A1 macht eine Lösung zur überwindlichen Begrenzung des durch den Hahn fliessenden Wassers bekannt, bei der die Begrenzungselemente überwindlichen Widerstandes ausserhalb der Kartusche angeordnet, so leicht zu entfernen beziehungsweise zu wechseln sind.

Das deutsche Veröffentlichungsdokument Nr. DE 4422125 A1 macht die Weiterentwicklung der obigen Lösung bekannt, bei der mindestens eines der Begrenzungselemente überwindlichen Widerstandes steif gemacht werden kann, sodass es einen festen Anschlag bildet.

Das deutsche Veröffentlichungsdokument Nr. DE 4301661 A1 macht eine solche temperaturgerichtete Begrenzung bekannt, deren Wesen ist, dass ausser den das Verdrehungsmass begrenzenden Stossflächen in der Kartusche ein die Verdrehung in einer Richtung behindernder Zusatzanschlag angeordnet beziehungsweise ausgestaltet ist.

Die europäische Patentanmeldung 0356402 A1 beschreibt eine Mischbatterie, in der sowohl zur Begrenzung des Auslaufwassers als auch der Wassertemperatur Begrenzungselemente angeordnet sind.

Das deutsche Veröffentlichungsdokument Nr. DE 3719410 A1 macht eine Mischbatterie bekannt, welche sich immer in die Grundlage zurückstellt, in welcher nur Kaltwasser fliesst.

Gemäss US Patent 4,387,880 ist der drehbare Teil der Kartusche mit mehreren hervorgehobenen Rippen und die innere Seite des Hauses mit wenigstens einer Rippe versehen, oder umgekehrt, wobei ein Zwischenstück lösbar unter den Rippen für eine starre Verdrehungslimitierung im Zusammenwirken mit der anderen Rippe angeordnet ist.

Die nach veröffentlichte PCT-Anmeldung WO 98/55787 kann als nächststehender Stand der Technik betrachtet werden. Bei dieser Mischbatteriekartusche, die mit einem Gehäuse, einer im Gehäuse befestigten Steuerscheibe, einer beweglichen Steuerscheibe, einem Bewegungshebel und einem Hebelhalter ausgestaltet ist, ist in dem Raum zwischen dem Hebelhalter und dem Gehäuse mindestens ein elastisches Element angeordnet, das mit dem Gehäuse oder mit dem Hebelhalter in mechanischer Verbindung steht, während vom Gehäuse und dem Hebelhalter auf jenem Teil, der mit dem elastischen Element nicht verbunden ist, ein Betätigungsteil oder ein weiteres elastisches Element angeordnet ist. Das Wesen dieser Lösung liegt darin, dass zur Durchflussmengebegrenzung ein Stopper, als Anschlag ausgebildet ist, der in einem Schlitz eines zylindrischen Abschnitts einer Führug einrastet, und dessen unteres Ende eine elastische Klemme umfasst, die mit dem Hebel zusammengeschaltet ist. Es ist also nur ein einziges elastisches Element, das aus dem Material der Führung ausgebildet ist. Die Elastizität und die Zusamnnearbeit der Elemente hängt in dieser Lösung von den Materialen des Hebels und des Gehäuses ab.

Unter den obenbeschriebenen Lösungen gibt es solche, deren mechanische Ausgestaltung sehr kompliziert, also aufwendig ist, und bei mehreren Elementen ist die Wahrscheinlichkeit des Schadhaftwerdens grösser, und die Zuverlässigkeit der Zusammenarbeit zwischen den Elementen, z.B. durch Veränderung der Elastizität verändern kann.

Die Konstruktionselemente der aus weniger Elementen aufgebauten Arretierungen sind ausserhalb des Kartuschengehäuses angeordnet, was zwar die nachträgliche Einfügung, Ausschaltung beziehungsweise Modifikation ermöglicht, gewährleistet dagegen keinen gehörigen mechanischen Schutz und Schutz vor der Beschmutzung der Arretierungsvorrichtung beziehungsweise-elemente.

Das Ziel der vorliegenden Erfindung ist, durch die Ausschaltung der obigen ungünstigen Merkmale den unnötigen Warmwasserverbrauch mit geringem Aufwand betriebssicher zu vermeiden.

Die Aufgabe der vorliegenden Erfindung ist, eine Kartusche zu konstruieren, welche an die Stelle der herkömmlichen Kartusche ohne Umbau in beliebige Batteriekörper eingesetzt werden kann und bei welcher zur Verdrehung des Betätigungshebels der Batterie auf verschiedenen Strecken seiner Bahn verschiedener Kraftbedarf notwendig ist, wobei die Arretierungselemente von der Verschmutzung einigermassen geschützt sind.

So kann bei Verdrehung des Hebels nach der Auslassung von Wasser gewisser Temperatur nur durch die Einsetzung von grösserer Kraft Wasser höherer Temperatur durch den Hahn ausfliessen. Die Kartusche zeigt dem Benutzer durch diesen erhöhten Kraftbedarf an, dass viel heisseres Wasser als sicher beziehungsweise wirtschaftlich durch den Hahn ausfliessen wird.

Erfindungsgemäss wird die obige Aufgabe durch eine Mischbatteriekartusche - insbesondere zur Mischung von Kalt-und Warmwasser - gelöst, welche Kartusche ein Gehäuse, zwei, übereinander angeordnete, miteinander eine Flachdichtung bildende, zur Regelung des Mischverhältnisses und der Menge der durchfliessenden Flüssigkeiten dienende Scheiben, nämlich eine Einlasscheibe und eine Steuerscheibe besitzt, wobei die Einlasscheibe im Kartuschengehäuse befestigt ist, während die Steuerscheibe auf der Einlasscheibe verschoben und verdreht werden kann, weiters im Kartuschengehäuse wenigstens teilweise ein um die Achse des Kartuschengehäuses verdrehbarer Hebelhalter angeordnet ist, in welchem Hebelhalter einum den im Hebelhalter angeordneten Stellstift verdrehbarer- Bewegungshebel gelagert ist, und im Raum zwischen dem Hebelhalter und dem Gehäuse mindestens ein elastisches Element ausgestaltet ist, das mit dem Gehäuse oder dem Hebelhalter in einer mechanischen Verbindung steht.

Das Wesen der Erfindung liegt darin, dass in der Wand auf der Innenseite des Gehäuses das mindestens eine elastische Element und in dem Hebelhalter ein weiteres elastisches Element oder eine Betätigungseinlage derart angeordnet sind, dass die relative Bahn des mindestens einen elastischen Elementes einerseits und der Betätigungseinlage oder des weiteren elastischen Elementes andererseits in Funktion der Verdrehung des Hebelhalters mindestens teilweise eine Überdeckung enthält.

Die Funktion der erfindungsgemässen Kartusche wird aufgrund der beiliegenden Zeichnungen wie folgt eingehend dargestellt.

Auf den beigelegten Zeichnungen ist
- die Figur 1.: der Seitenschnitt einer Ausführungsform einer Kartusche,
- die Figur 2.: der Aufsichtschnitt einer Ausführungsform der Kartusche beim Verdrehungsbeginn des Kartuschenhebels, in geschlossener Lage der Kartusche,
- die Figur 3.: der Aufsichtschnitt einer Ausführungsform der Kartusche, beim Beginn der elastischen Formänderung der Feder, in geschlossener Lage der Kartusche,
- die Figur 4.: der Aufsichtschnitt einer Ausführungsform der Kartusche beim Verdrehungsschluss des Kartuschenhebels, in geschlossener Lage der Kartusche,

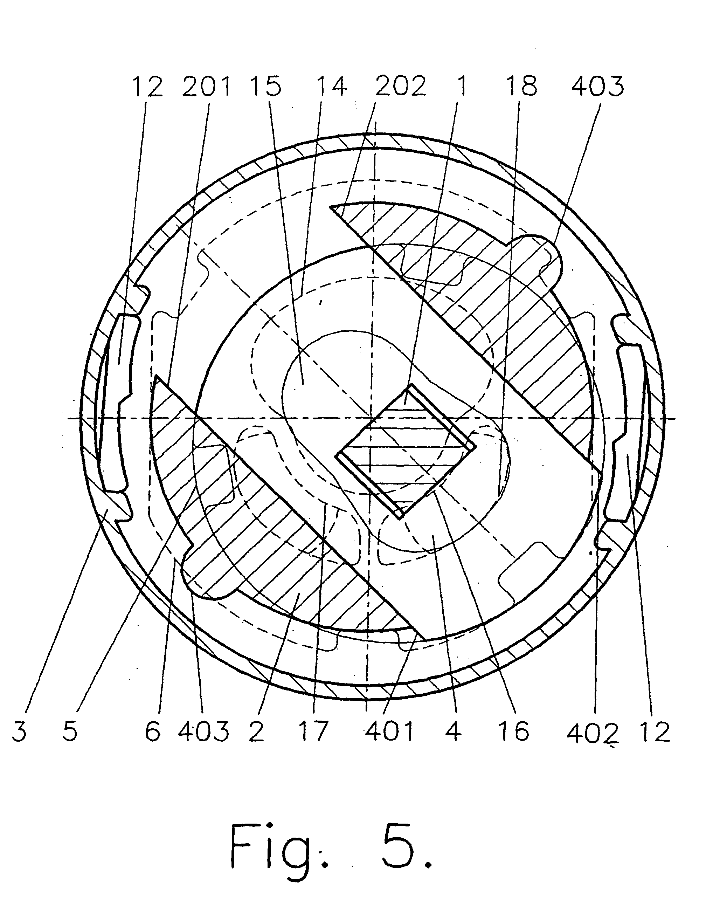

- die Figur 5.: der Aufsichtschnitt einer Ausführungsform der Kartusche, beim Verdrehungsbeginn des Kartuschenhebels, in offener Lage der Kartusche,

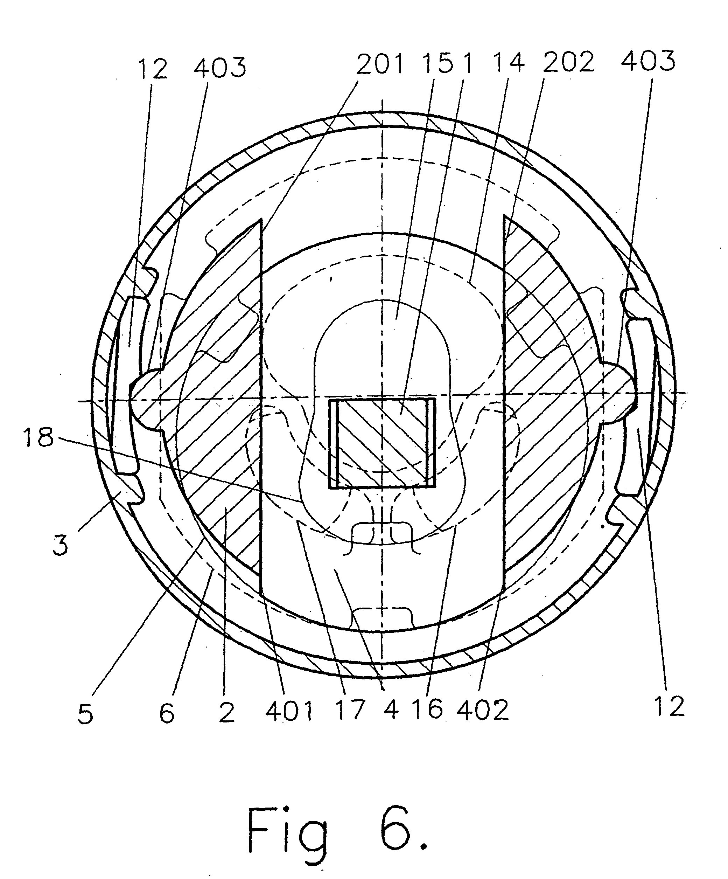

- die Figur 6.: der Aufsichtschnitt einer Ausführungsform der Kartusche, beim Beginn der elastischen Formänderung der Feder, in offener Lage der Kartusche,

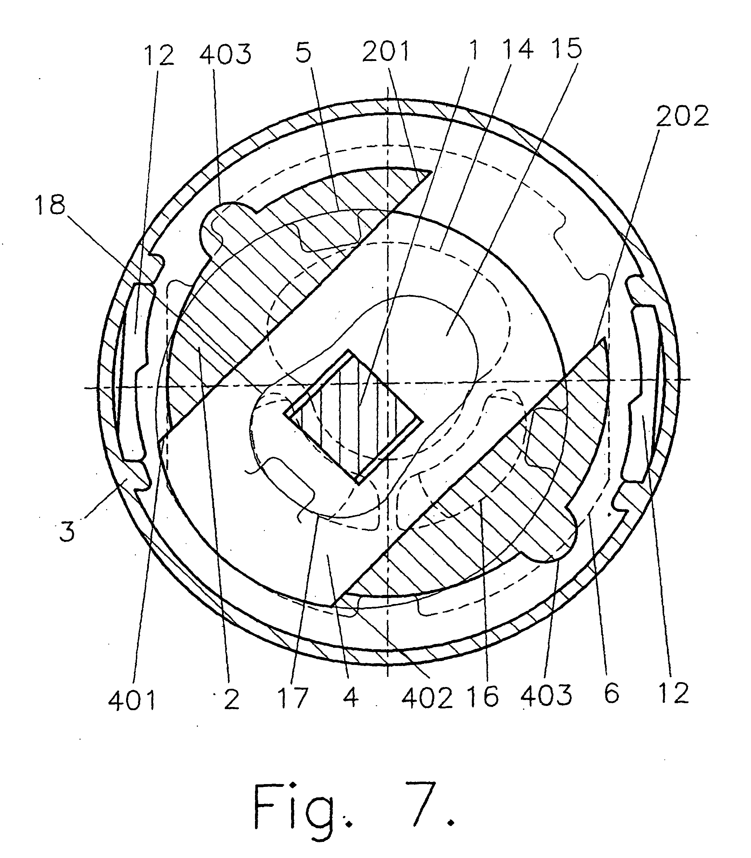

- die Figur 7.: der Aufsichtschnitt einer Ausführungsform der Kartusche, beim Verdrehungsschluss des Kartuschenhebels, in offener Lage der Kartusche,
- die Figur 8.: der Aufsichtschnitt einer Ausführungsform der erfindungsgemässen Kartusche, bei der einander gegenüber zwei elastische Elemente angeordnet sind,
- die Figur 9.: der Aufsichtschnitt einer Ausführungsform der Kartusche, bei der einander gegenüber ein im Hebelhalter angeordnetes elastisches Element und eine in der Wand des Gehäuses angeordnete Einlage angeordnet sind,
- die Figur 10.: der Aufsichtschnitt einer weiteren Ausführungsform der erfindungsgemässen Kartusche, bei der das elastische Element in der Wand des Gehäuses und die Einlage im Hebelhalter angeordnet ist,
- die Figur 11.: der Aufsichtschnitt einer Ausführungsform der Kartusche, bei der das elastische Element in der Innenwand des Gehäuses und der Betätigungsteil im Hebelhalter ausgestaltet ist,
- die Figur 12.: der Aufsichtschnitt einer Ausführungsform der Kartusche, bei der der Betätigungsteil in der Wand des Gehäuses und das elastische Element im Hebelhalter ausgestaltet ist,
- die Figur 13.: der Aufsichtschnitt einer Ausführungsform der Kartusche, bei der das elastische Element in der Wand des Gehäuses und die Betätigungseinlage in der Wand des Hebelhalters angeordnet ist.
- Die Figur 14.: der Aufsichtschnitt einer Ausführungsform der Kartusche, bei der das elastische Element in der Wand des Hebelhalters und die Betätigungseinlage in der Wand des Gehäuses angeordnet ist.

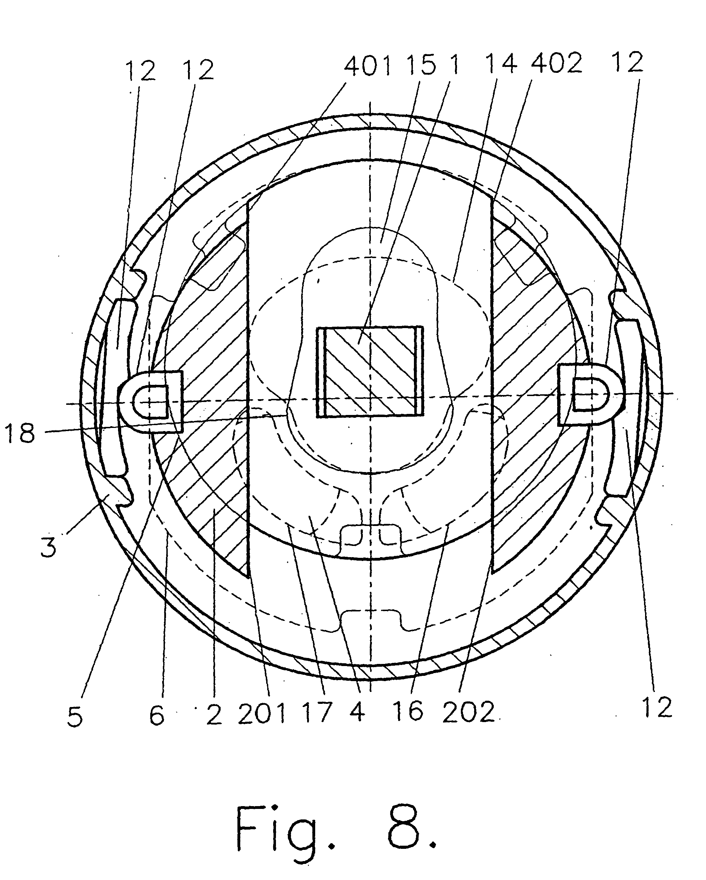

Die beauspruchte Erfindung ist nur is den figuren 8, 10 und 13 gezeigt.

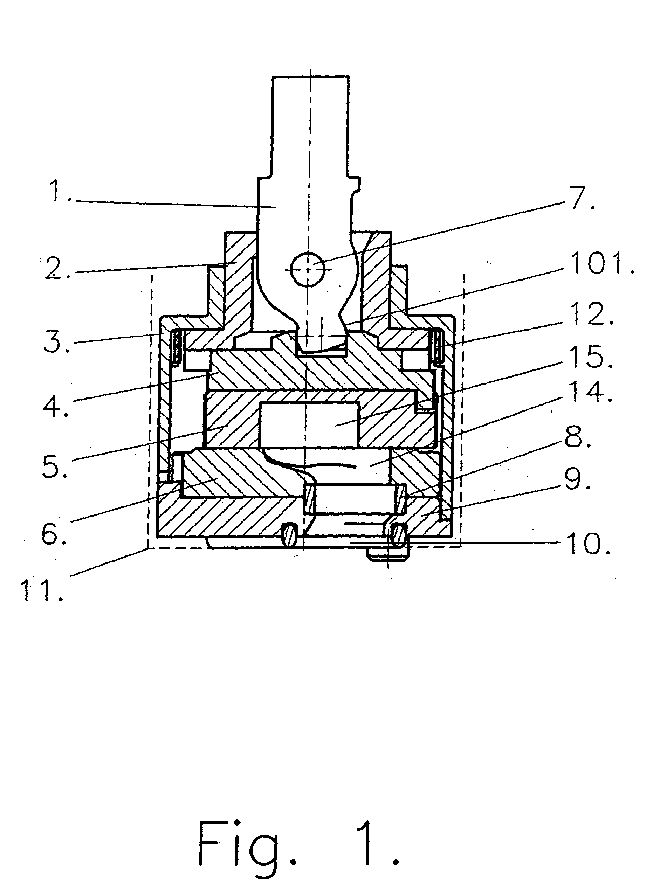

Der Seitenschnitt der dargestellten Ausführungsform der erfindungsgemässen Kartusche wird aufgrund der Figur 1. beschrieben. Im Gehäuse 3 der Kartusche ist unten die zur Einführung des Kalt- und Warmwassers sowie zur Ausführung der Mischwassers dienende Einlasscheibe 6 angeordnet, bei welcher der Wasserraum durch die Gummidichtungen 8 isoliert ist.

Im Batteriekörper 11 ist zur Isolierung gegen das durch die Kartusche fliessende Wasser die Dichtung 10 des Gehäuses 3 angeordnet.

Über der Einlasscheibe 6 - darauf an einer ebenen Fläche bewegbar - ist die Steuerscheibe 5 angeordnet, durch deren Verdrehung das Mischverhältnis des Kalt- und Warmwassers und durch ihre Verschiebung die Menge des Auslaufwassers geregelt beziehungsweise zugesperrt werden kann. Die Steuerscheibe 5 und die Einlasscheibe 6 bilden miteinander eine Flachdichtung, die sich aufeinander bewegenden Flächen sind poliert.

Die Steuerscheibe 5 ist mit dem Keramikbewegungselement 4 in Mitnehmerverbindung und das mit dem Bewegungshebel 1 in Mitnehmerverbindung steht.

Der Bewegungshebel 1 ist im Hebelhalter 2 durch den Stellstift 7 verdrehbar gelagert. Der Hebelhalter 2 ist samt dem darin durch den Stift 7 befestigten Bewegungshebel 1 im Kartuschengehäuse 3, um die Symmetrieachse des Kartuschengehäuses verdrehbar angeordnet. Am Unterteil des Bewegungshebels 1 ist zur Vermittlung der Mitnehmerverbindung zwischen dem Bewegungshebel 1 und dem Keramikbewegungselement 4 eine Zylinderfläche ausgestaltet.

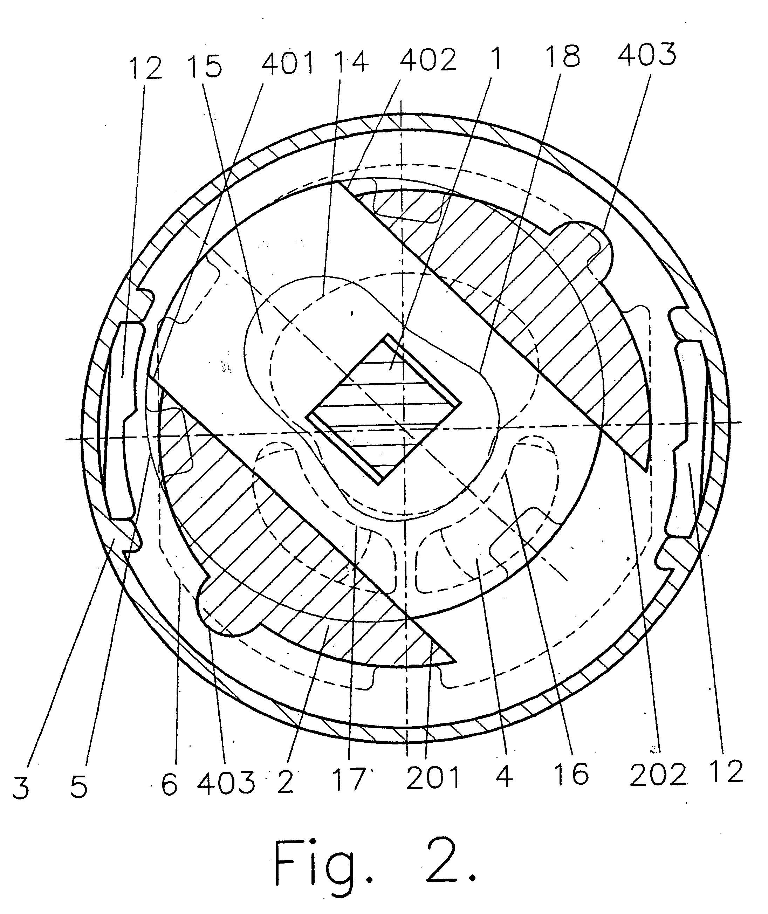

Im Folgenden werden zuerst die gemeinsamen Elemente der Figuren 2.-14. beschrieben.

Auf jeder von Figuren 2.-14. sind der Bewegungshebel 1, das Gehäuse 3, das elastische Element 12, die Einlage 13, der Hebelhalter 2 und das Keramikbewegungselement 4 in Schnitt zu sehen weiters die die Flachdichtung bildende Steuerscheibe 5 und Einlasscheibe 6 mit Strichellinie dargestellt.

Die jeweilige Bewegung, also die Verdrehung und Verschiebung der Steuerscheibe 5 entspricht der Bewegung des Keramikbewegungselementes 4.

In der Einlasscheibe 6 sind die Kaltwasser-Einlassöffnung 16, die Warmwasser-Einlassöffnung 17 weiters die Mischwasser-Ausiassöffnung 14 ausgestaltet.

In der Steuerscheibe 5 ist die Überbrückungskammer 15 ausgestaltet, deren auf die Kaltwasser-Einlassöffnung 16 und die Warmwasser-Einlassöffnung 17 zu liegender Flansch die Steuerkante 18 der Steuerscheibe 5 bildet.

Auf dem Keramikbewegungselement 4 sind die erste Fläche des Keramikbewegungselementes 401 und die zweite Fläche des Keramikbewegungselementes 402 ausgestaltet, die an der im Hebelhalter 2 ausgestalteten ersten Führungsfläche 201 beziehungsweise zweiten Führungsfläche 202 zugeführt sind.

Im Folgenden wird die Funktion einer Ausführungsform der erfindungsgemässen Kartusche aufgrund der Figuren 2.-7. eingehend beschrieben.

Die Figuren 2., 3. und 4. stellen diese Ausführungsform der erfindungsgemässen Kartusche in geschlossener Lage dar, wobei der Bewegungshebel 1 samt dem Hebelhalter 2 von der Ausgangslage in die Endlage gedreht wird.

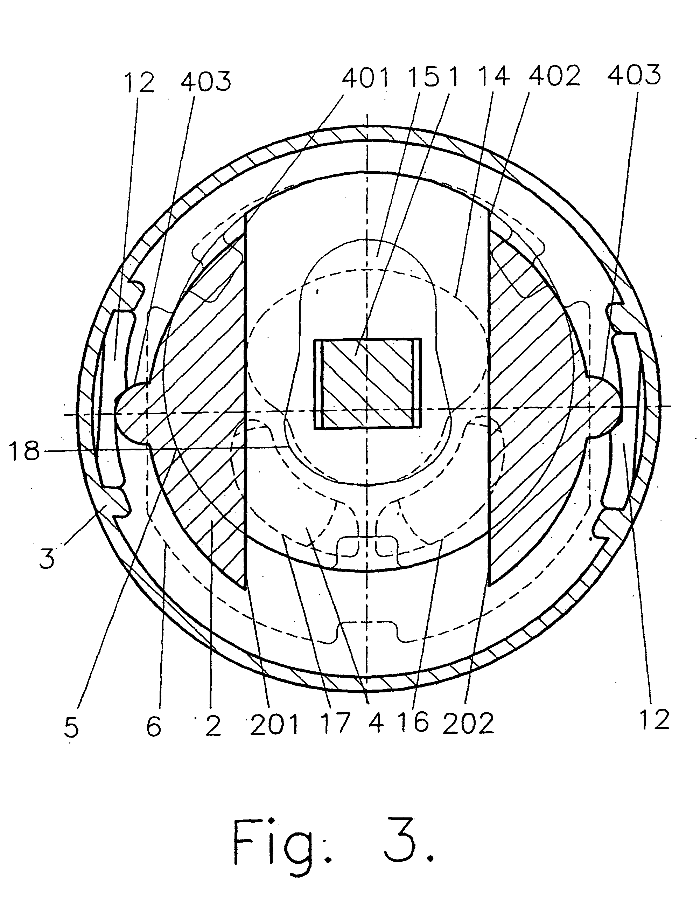

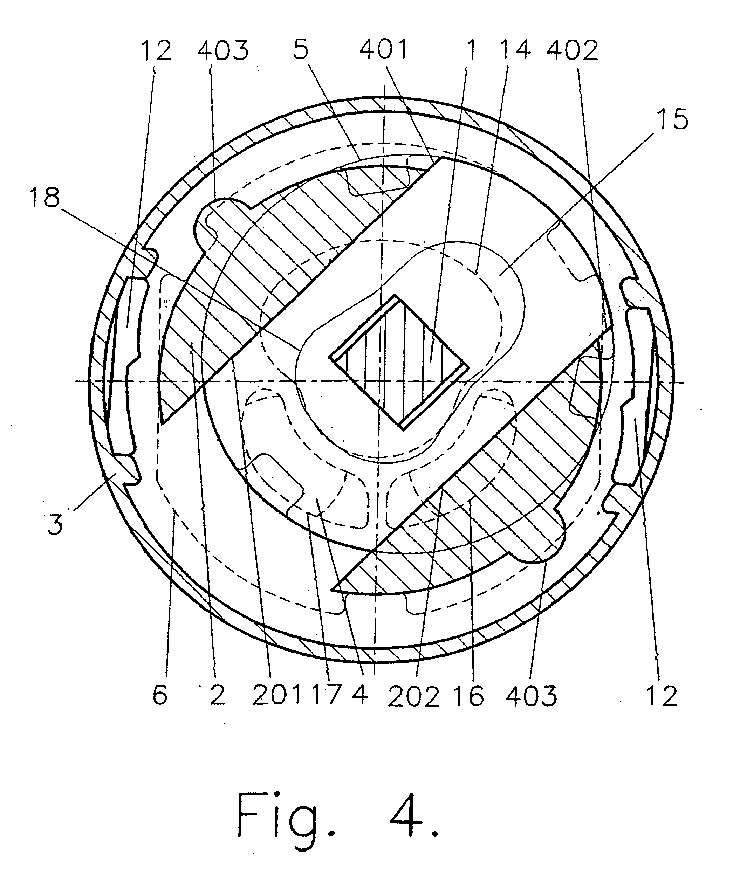

Die Figur 2. stellt die Ausgangslage, die Figur 4. die Endlage und die Figur 3. jene Lage dar, als der im Hebelhalter 2 ausgestaltete Betätigungsteil 403 das an der Innenseite des Gehäuses 3 angeordnete elastische Element 12 eben berührt.

Wenn der Hebelhalter 2 besser nach links gedreht wird, so deformiert der Betätigungsteil 403 das elastische Element 12 und die zu dieser Deformation notwendige Kraft erhöht die auf dem Bewegungshebel 1 zur Verdrehung zu entfaltende Kraft.

Falls der Oberteil des Bewegungshebels 1 in Öffnungsrichtung verschoben wird, dann verschiebt sich der Bewegungshebel 1 auf dem Teil unter dem Stellstift 7 in entgegengesetzte Richtung - nach unten -, auch das Keramikbewegungselement 4 nach unten verschiebend.

Durch die Verschiebung - von der Verschiebung des Bewegungshebels 1 bestimmten Masses - des Keramikbewegungselementes 4 veranlasst überbrückt die in der Steuerscheibe 5 ausgestaltete Überbrückungskammer 15 die in der Einlasscheibe 6 ausgestaltete Kaltwasser-Einlassöffnung 16 sowie Warmwasser-Einlassöffnung 17 und die Mischwasser-Ausführung 14, auf diese Weise fliesst also durch die Auslauföffnung der die Kartusche aufnehmenden Batterie Mischwasser aus.

Den Bewegungshebel 1 verdreht verbindet die in der Steuerscheibe 5 ausgestaltete Überbrückungskammer 14 vom Ausmass der Verdrehung abhängig in je grösserem Masse die in der Einlasscheibe 6 ausgestaltete Warmwasser-Einführung 17 mit der gleichfalls in der Einlasscheibe 6 ausgestalteten Mischwasser-Ausführung 14, während bei einem bestimmten Ausmass der Verdrehung der Betätigungsteil 403 des Hebelhalters 2 an das im Gehäuse angeordnete elastische Element 12 anstosst, so begrenzend die Bewegung des Hebelhalters 2 mit der gewöhnlichen Kraft, dann zwingt die auf den Hebelhalter 2 in die Drehrichtung entfaltete weitere Kraft das elastische Element 12 zur Formänderung und somit kann der Hebelhalter 2 weiter gedreht werden.

Der Bewegungshebel 1 sowie der diesem angeschlossene Hebelhalter 2 und das Keramikbewegungselement 4 können auch in dem Ausmass verdreht werden, dass die Überbrückung zwischen der in der Einlasscheibe 6 ausgestalteten Kaltwasser-Einführung 16 und Mischwasser-Ausführung 14 aufhört, weil der ebene Teil der Steuerscheibe 5 die in der Einlasscheibe 6 ausgestaltete Kaltwasser-Einführung 16 verschliesst. In diesem Falle kann die in der Steuerscheibe 5 ausgestaltete Überbrückungskammer 14 ausschliesslich zwischen der in der Einlasscheibe 6 ausgestalteten Warmwasser-Einführung 17 und der gleichfalls in der Einlasscheibe 6 ausgestalteten Mischwasser-Ausführung 14 eine Überbrückung in dem Ausmass der Verdrehung des Bewegungshebels 1 in vertikaler Ebene zustande bringen.

Die Verdrehungen um die beiden Achsen sind voneinander unabhängig, so kann eine beliebige Variation der Lage der Steuerscheiben im Verhältnis zueinander gewonnen werden, die Kartusche kann daher in beliebig wählbarer Lage, gemäss dem Wassermengen- und Temperaturbedarf verwendet werden.

Den Bewegungshebel 1 der Kartusche aus der Lage gemäss der Figur 2. um die Symmetrieachse des Kartuschengehäuses verdrehend bleibt die Kartusche immer in geschlossenem Zustand.

Die Verdrehung des Bewegungshebels 1 der Kartusche in beiden Richtungen ist durch die in der Kartusche angeordneten Stossflächen begrenzt.

Bei der Ausführungsform gemäss der Figur 8. ist in der Wand des Gehäuses 3 sowie im Hebelhalter 2 je ein elastisches Element 12 angeordnet, in der Weise, dass sie aneinander stossen gelassen beziehungsweise in Deckung gebracht werden können.

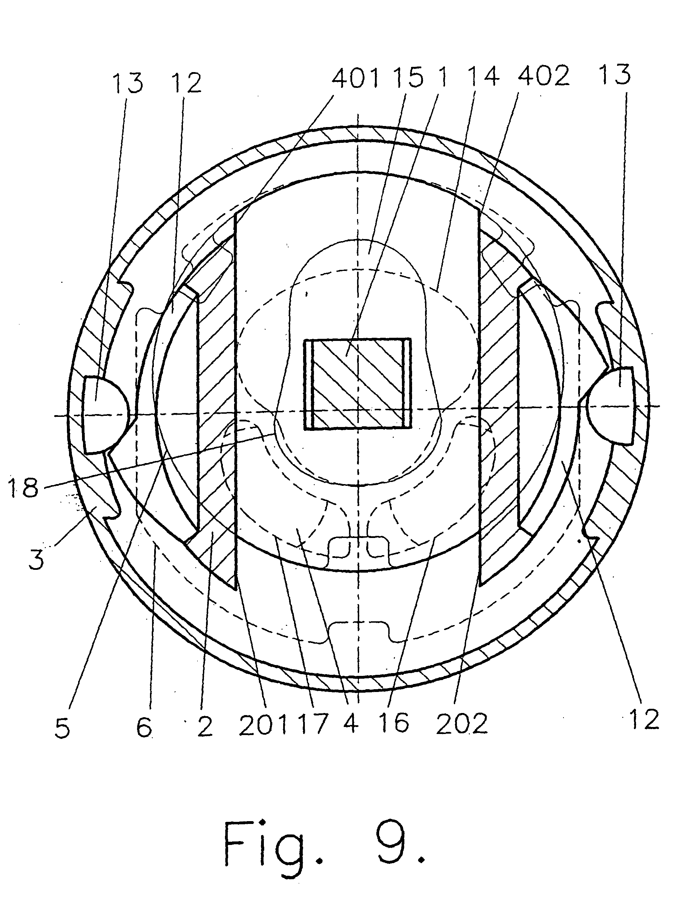

Bei der Ausführungsform gemäss der Figur 9. ist das im Hebelhalter 2 angeordnete elastische Element 12 und die in der Wand des Gehäuses angeordnete Betätigungseinlage 13 derart angeordnet, dass sie miteinander in Stoss gebracht werden können.

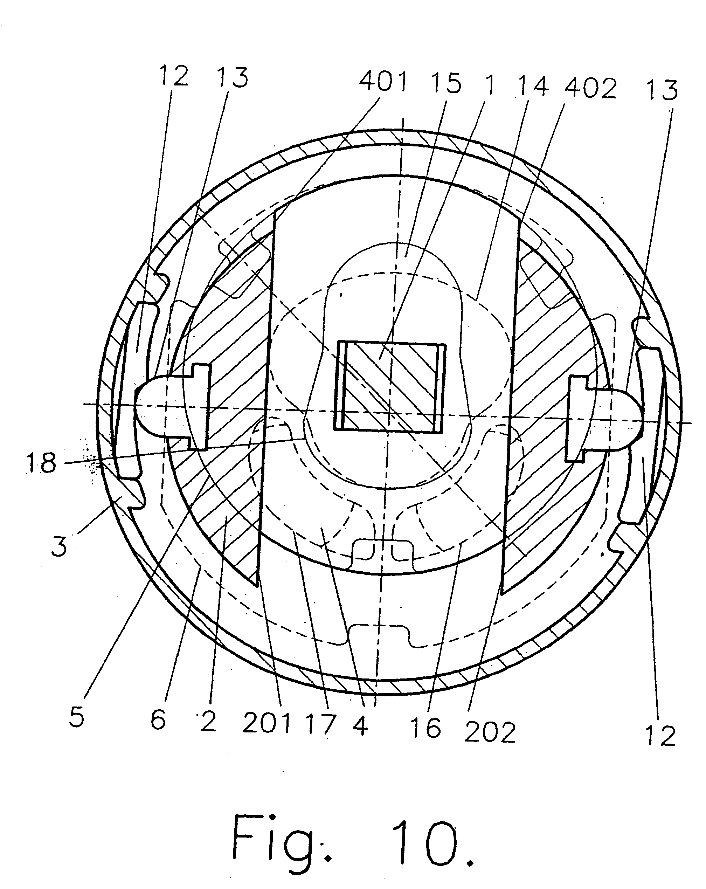

Bei der Ausführungsform gemäss der Figur 10. der erfindungsgemässen Kartusche ist das elastische Element 12 in der Wand des Gehäuses 3 und die Betätigungseinlage 13 im Hebelhalter 2 derart angeordnet, dass sie miteinander in Stoss gebracht werden können.

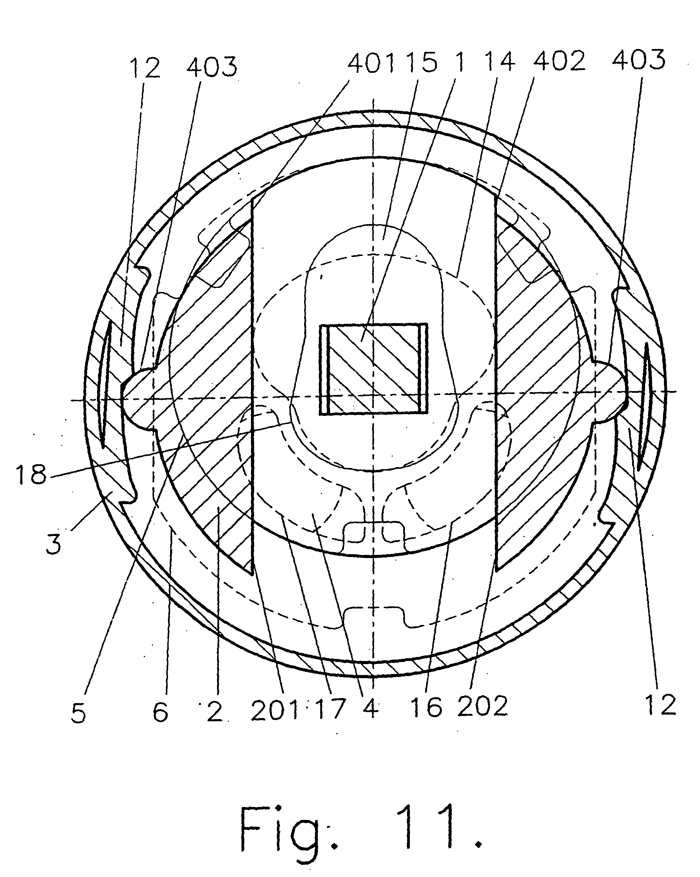

Bei der in der Figur 11. sehbaren Ausführungsform der erfindungsgemässen Kartusche ist das elastische Element 12 in der Innenwand des Gehäuses 3 und der Betätigungsteil 403 im Hebelhalter 2 miteinander stossbar ausgestaltet.

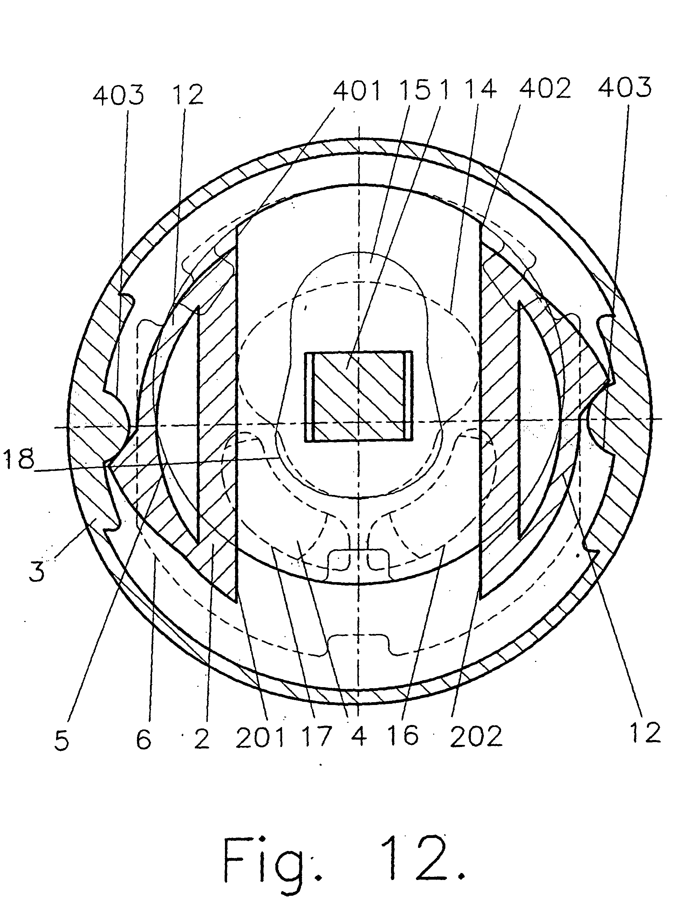

Bei der in der Figur 12. sehbaren Ausführungsform der erfindungsgemässen Kartusche ist der Betätigungsteil 403 in der Wand des Gehäuses 3 und das elastische Element 12 im Hebelhalter 2 ausgestaltet.

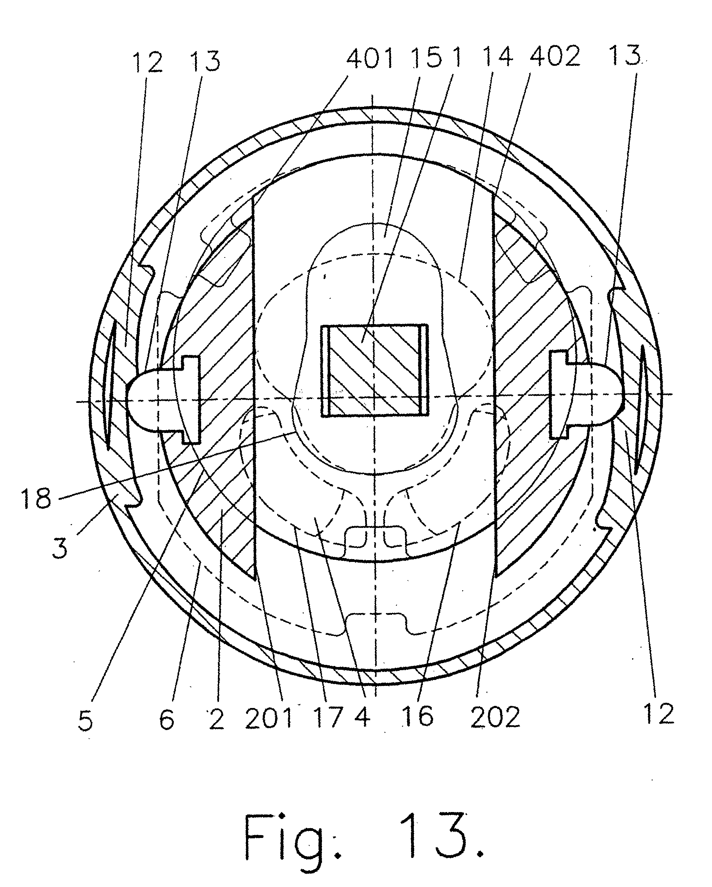

Bei der Ausführungsform gemäss der Figur 13. der erfindungsgemässen Kartusche ist das elastische Element in der Wand des Gehäuses 3 und die Betätigungseinlage 13 in der Wand des Hebelhalters 2 angeordnet.

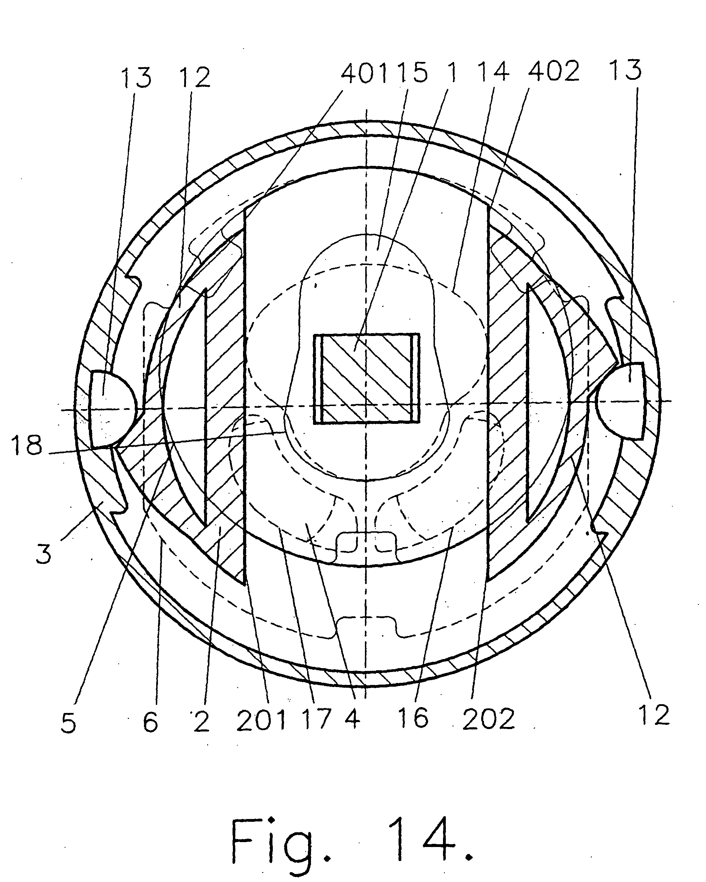

Bei der in der Figur 14. sehbaren Ausführungsform der erfindungsgemässen Kartusche ist das elastische Element 12 in der Wand des Hebelhalters 2 ausgestaltet und die Betätigungseinlage 12 in der Wand des Gehäuses 3 angeordnet.

Zusammenfassend ist es aus den Figuren ersichtlich, dass einem der im Verhältnis zueinander verdrehbaren Gehäuse 3 und Hebelhalter 2 ein elastisches Element 12 angeschlossen beziehungsweise darin ausgestaltet ist, weiters am anderen Element ein Betätigungsteil 403 oder ein weiteres elastisches Element 12 ausgestaltet ist, beziehungsweise im anderen Element eine Betätigungseinlage 13 beziehungsweise ein weiteres elastisches Element 12 ausgestaltet oder angeordnet ist, und zwar in der Weise, dass die relative Bahn des elastischen Elementes 12 und des Betätigungsteiles 403, der Betätigungseinlage 13 beziehungsweise des weiteres elastischen Elementes 12 in Funktion der Verdrehung des Hebelhalters eine Überdeckung enthält, d.h. bei Verdrehung des Hebelhalters 2 stossen auf irgendeinem Punkt der Verdrehungsbahn das elastische Element 12 beziehungsweise der Betätigungsteil 403 oder das Betätigungselement 13 oder das weitere elastische Element 12 aneinander, danach bei weiterer Verdrehung des Hebelhalters 2 deformiert sich das elastische Element 12 - gegebenenfalls noch das weitere elastische Element 12 - damit erschwerend die weitere Verdrehung des Hebelhalters 2.

Die Kaltwasser- und Warmwasser-Einlassöffnungen können miteinander vertauscht werden, dann ändert sich die Funktion der Kartusche durch die Vertauschung der Kaltwasser- und Warwasserseite.

Ein Vorteil der erfindungsgemässen Batteriekartusche ist, dass diese gegen die herkömmlichen Kartuschen vollkommen auswechselbare Kartusche einfacher Mechanik eine bedeutende Warmwasserersparnis zur Folge hat und so ihre Verwendung aus Sicht des Umweltschutzes und der Energieersparung günstig ist.

## Patentansprüche

1. Mischbatteriekartusche-insbesondere zur Mischung von Kalt-und Warmwasser-, welche Kartusche ein Gehäuse (3), zwei, übereinander angeordnete, miteinander eine Flachdichtung bildende, zur Regelung des Mischverhältnisses und der Menge der durchfliessenden Flüssigkeiten dienende Scheiben, nämlich eine Einlasscheibe (6) und eine Steuerscheibe (5) besitzt, wobei die Einlasscheibe im Kartuschengehäuse befestigt ist, während die Steuerscheibe auf der Einlasscheibe verschoben und verdreht werden kann, weiters im Kartuschengehäuse wenigstens teilweise ein um die Achse des Kartuschengehäuses (3) verdrehbarer Hebelhalter (2) angeordnet ist, in welchem Hebelhalter ein- um einen im Hebelhalter angeordneten Stellstift (7) verdrehbarer- Bewegungshebel (1) gelagert ist, und im Raum zwischen dem Hebelhalter und dem Gehäuse mindestens ein elastisches Element (12) ausgestaltet ist, das mit dem Gehäuse oder dem Hebelhalter in einer mechanischen Verbindung steht, wobei in der Wand auf der Innenseite des Gehäuses (3) das mindestens eine elastische Element (12) und in dem Hebelhalter (2) ein weiteres elastisches Element (12) oder eine Betätigungseinlage (13) derart angeordnet sind, dass die relative Bahn des mindestens einen elastischen Elementes (12) einerseits und der Betätigungseinlage (13) oder des weiteren elastischen Elementes (12) andererseits in Funktion der Verdrehung des Hebelhalters (2) mindestens teilweise eine Überdeckung enthält.

2. Die Kartusche gemäss Anspruch 1. **dadurch gekennzeichnet, dass** in dem Hebelhalter (2) das weitere elastische Element (12) angeordnet ist.

3. Die Kartusche gemäss Anspruch 1. **dadurch gekennzeichnet, dass** in dem Hebehalter (2) die Betätigungseinlage (13) angeordnet ist.

## Claims

1. Mixing valve battery cartridge especially for mixing cold and warm water, said cartridge having a casing (3), two discs, an inlet disc (6) and a regulating disc (5), arranged one above the other forming together a plane sealing and serving for controlling both the mixing ratio and flow of the liquids flowing through the valve battery, said inlet disc being fixed in the cartridge housing and the regulating disc can be displaced and rotated on the inlet disc; further having a lever holder (2) being rotatable around the axis of the cartridge casing (3) and being arranged at least partly in the cartridge casing (3), the lever holder (2) has a driving arm being rotatable around a fastening pin (7) mounted in the lever holder, and at least one elastic element (12) is arranged in the space between the lever holder and the casing and is in mechanical connection with either the casing or the lever holder wherein in the wall on the inner side of the casing (3) at least one elastic element (12) and in the lever holder (2) a further elastic element (12) or an actuating insertion piece (13) are arranged in such a manner that the relative path of the at least one elastic element (12) on the one part and the actuating insertion piece (13) and/or the further elastic element (12) on the other part are at least partly overlapped, depending on the rotational angle of the lever holder (2).

2. Cartridge according to claim 1 **characterized in that** in the lever holder (2) the further elastic element (12) is arranged.

3. Cartridge according to claim 1 **characterized in that** in the lever holder (2) the actuating insertion piece (13) is arranged.

## Revendications

1. Cartouche de mitigeur, en particulier pour mélanger de l'eau froide et chaude, cette cartouche comprenant une boîte (3), deux disques, notamment un disque d'admission (6) et un disque de réglage (5), pour le réglage des proportions de mélange et du débit des fluides passants, ces disques étant disposés l'un sur l'autre et constituant un joint plat l'un avec l'autre, le disque d'admission étant fixé dans la boîte de cartouche, tandis que le disque de réglage pouvant étre déplacé et tourné sur le disque d'admission (6), en plus, un support de manette (2) étant disposé au moins partiellement dans la boîte de cartouche (3), ce support de manette pouvant étre pivoté autour de l'axe de la boîte de cartouche (3), une manette (1) étant logée dans ce support de manette, cette manette pouvant étre pivotée autour d'une tige de fixation (7) arrangée dans le support de manette (2), et au moins un élément élastique (12) étant formé dans l'espace entre le support de manette et la boîte, cet au moins un élément élastique étant relié mécaniquement avec la boîte ou le support de manette, dans laquelle cet au moins un élément élastique (12) étant disposé dans la paroi sur la face interne de la boîte (3), et un élément élastique (12) supplémentaire ou une pièce intercalaire d'actionnement (13) étant disposé dans le support de manette (2) de la manière que le trajet relatif de l'au moins un élément élastique (12) d'une part et de la pièce intercalaire d'actionnement (13) ou de l'élément élastique (12) supplémentaire d'autre part se recouvrent au moins partiellement en fonction du pivotement du support de manette (2).

2. Cartouche selon la revendication 1, **caractérisée en ce que** dans le support de manette (2) est disposé un élément élastique (12) supplémentaire.

3. Cartouche selon la revendication 1, **caractérisée en ce que** dans le support de manette (2) est disposé une pièce intercalaire d'actionnement (13).
